**Europäisches Patentamt**

**European Patent Office**

**Office européen des brevets**

(19)

(11) Veröffentlichungsnummer : **0 148 260 B1**

# EUROPÄISCHE PATENTSCHRIFT

(12)

(45) Veröffentlichungstag der Patentschrift :
09.11.88

(21) Anmeldenummer : 84902783.4

(22) Anmeldetag : 11.06.84

(86) Internationale Anmeldenummer :
PCT/DE 84/00141

(87) Internationale Veröffentlichungsnummer :
WO/8500477 (31.01.85 Gazette 85/03)

(51) Int. Cl.⁴ : **H 02 P  7/00**

(54) GEREGELTE STROMVERSORGUNGSEINHEIT.

(30) Priorität : **11.07.83 DE 3324937**

(43) Veröffentlichungstag der Anmeldung :
**17.07.85 Patentblatt 85/29**

(45) Bekanntmachung des Hinweises auf die Patenterteilung : **09.11.88 Patentblatt 88/45**

(84) Benannte Vertragsstaaten :
**AT CH DE FR GB LI NL SE**

(56) Entgegenhaltungen :
**EP-A- 0 023 623**
**DE-A- 2 008 244**
**Buch von Heumann/Stumpe "Thyristoren", 3. Auflage 1974, S. 42-46**
**Buch von Zach "Leistungselektronik", Wien/New-York 1979, S. 87, 88, 113**

(73) Patentinhaber : **MAGNETMOTOR GMBH**
**Petersbrunner Strasse 4**
**D-8031 Starnberg (DE)**

(72) Erfinder : **GRÜNDL, Andreas**
**Haseneystrasse 20**
**D-8000 München 70 (DE)**

(74) Vertreter : **Münich, Wilhelm**
**Kanzlei Münich, Steinmann, Schiller Willibaldstrasse 36/38**
**D-8000 München 21 (DE)**

## Beschreibung

### Technisches Gebiet

Die Erfindung betrifft eine geregelte Hochstrom-Versorgungseinheit für eine induktive und rückarbeitsfähige Last.

Stromversorgungseinheiten werden beispielsweise als 4-Quadranten-Steller für die Stromversorgung von Motoren mit zwei Drehrichtungen oder von Magnetbahnen verwendet (EP-A1-0023 623).

### Stand der Technik

Derartige Stromversorgungseinheiten können zur Stromerhöhung nur mit Schwierigkeiten parallel geschaltet werden, da Störungen die Synchronisierung der Ansteuereinheiten erschweren.

### Darstellung der Erfindung

Der Erfindung liegt die Aufgabe zugrunde, bei einer Hochstrom-Versorgungsanordnung mit Parallelschaltung mehrerer Stromversorgungseinheiten eine synchronisierte Ansteuerung mit Stromüberwachung bei möglichst geringem baulichen Aufwand vorzusehen.

Diese Aufgabe wird erfindungsgemäß durch die im Patentanspruch 1 angegebenen Merkmale gelöst. Durch die Strommessung über Hallgeneratoren, die auf dem Potential der Ansteuereinheiten liegen, werden nicht nur der schaltungstechnische Aufwand sowie die Anforderung an die verwendeten Bauelemente herabgesetzt, sondern es ist auch problemlos möglich, mehrere Ansteuereinheiten parallel zu schalten. Damit kann die erfindungsgemäße Stromversorgungseinheit sowohl für Aufgaben Verwendung finden, bei denen eine Vielzahl von getrennten Einheiten benötigt werden, wie beispielsweise bei der Stromversorgung von Magnetbahnen, als auch in Einsatzfällen, bei denen hohe Ströme benötigt werden. In diesen Fällen wird einfach die erforderliche Zahl der Einheiten, von denen jede nur einen kleinen Strom liefern muß, parallel geschaltet. Ferner ist es dadurch möglich, standardisierte Einheiten, die beispielsweise für einen Strom von 10 bis 15 A ausgelegt sind, für eine Vielzahl von Einsatzfällen zu verwenden. Diese standardisierten Einheiten sind aufgrund des Aufbaus in « gedruckter Technik » oder Hybridtechnik sowie aufgrund der durch die Standardisierung erreichten großen Stückzahlen besonders kostengünstig herzustellen.

Besonders vorteilhaft wird die Erfindung unter Einsatz von 4-Quadranten-Stellern eingesetzt, wie diese beispielsweise zur Steuerung eines Motors mit umkehrbarer Drehrichtung verwendet werden (EP-A1-0 023 623).

Es schaltet also das Ausgangssignal der Strom-Meßeinrichtung, die einen Überstrom mißt, nicht nur das ihr zugeordnete Schaltelement, sondern auch die entsprechenden Schaltelemente der anderen Einheiten ab : Bei einem 4-Quadranten-Steller werden also beispielsweise alle Schaltelemente mit der Nr. 3 in den Zustand mit hohem Widerstand umgeschaltet, wenn eine Strom-Meßeinrichtung mit der Nr. 3 einen Überstrom mißt. Der Schaltzustand der Schaltelemente mit den Nr. 1, 2 oder 4 bleibt dabei ungeändert.

Zur Vermeidung von Streupotentialen ist es von Vorteil, mittel sogenannter Optokoppler die Einheiten untereinander zu verbinden.

Eine besonders aufwandarme Lösung der Aufgabe ist im Anspruch 2 angegeben, wonach mehrere Stromversorgungseinheiten in einer Master/Slave-Schaltung parallel geschaltet werden und wobei nur noch die als « Master » dienende Stromversorgungseinheit den Strom mißt und bei Auftreten eines Überstroms alle anderen Einheiten mit abschaltet. Dabei ist jedoch die Annahme gemacht, daß sich der Gesamtstrom gleichmäßig auf die einzelnen Einheiten aufteilt, und bei keiner der « Slave »-Einheiten ein Überstrom auftritt, ohne daß die « Master »-Einheit einen Überstrom mißt.

Weiterbildungen der Erfindung sind in den abhängigen Ansprüchen angegeben.

Die Hallgeneratoren können beispielsweise gemäß Anspruch 3 geschaltet sein.

Der gemäß Anspruch 4 vorgesehene Thyristor mit Gateabschaltung verringert den erforderlichen schaltungstechnischen Aufwand weiter.

Die Parallelschaltung standardisierter Einheiten, von denen jede nur für einen geringen Strom, beispielsweise in der Größenordnung von 10 bis 20 A ausgelegt ist, erlaubt in einfacher und kostengünstiger Weise die Bereitstellung hoher Ströme.

In jedem Fall ist es jedoch von Vorteil, einen Ausgangsanschluß der jeweiligen Einheiten über eine entsprechend dimensionierte Schutzinduktivität mit der Last zu verbinden.

Mit der erfindungsgemäßen Stromversorgungseinheit läßt sich ferner eine Hochstromversorgungseinheit zum Ausgleich kurzzeitiger Netz-Spitzenwerte realisieren, bei der die Einkopplung des Stroms synchron zur Netzfrequenz erfolgt.

Dabei ist es besonders vorteilhaft, als Notstromeinheit einen mit einem mechanischen Schwungrad verbundenen Generator zu verwenden, dessen Ausgangsspannung ein Gleichrichter gleichrichtet.

Kurze Beschreibung der Zeichnungen :

Fig. 1 eine Prinzipschaltung eines 4-Quadranten-Stellers,

Fig. 2 eine Prinzipschaltung einer Ansteuereinheit,

Fig. 3 ein Strom/Zeitdiagramm zur Erläuterung der erfindungsgemäßen Stromversorgungseinheit,

Fig. 4 die Parallelschaltung mehrerer erfindungsgemäßer Stromversorgungseinheiten, und

Fig. 5 eine Anwendung der erfindungsgmäßen Stromversorgungseinheiten.

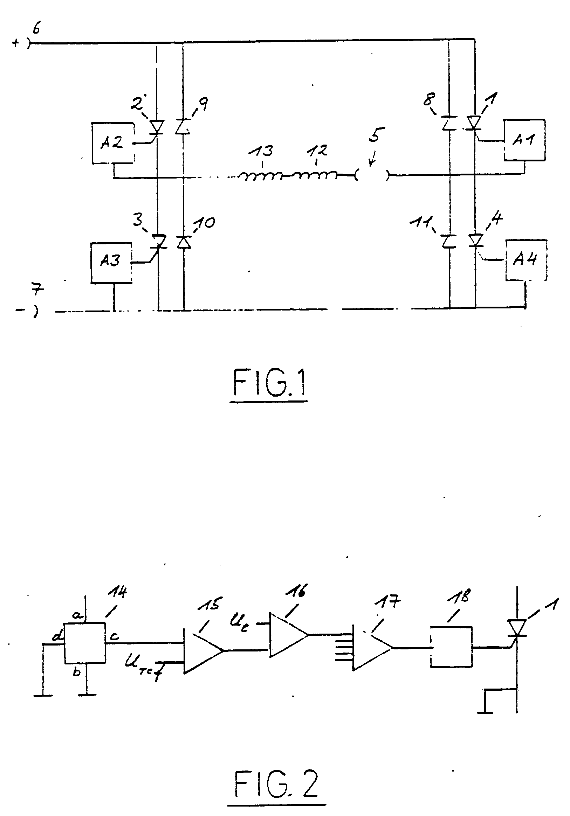

Fig. 1 zeigt eine an sich bekannte Schaltung eines 4-Quadranten-Stellers. Schaltelemente 1, 2, 3 und 4 verbinden eine aktive, induktive Last 5 mit dem positiven Pol 6 und dem negativen Pol 7 einer rückladbaren Gleichspanungsquelle. Bei dem gezeigten Ausführungsbeispiel sind die Schaltelemente Thyristoren mit Gateabschaltung, die von Ansteuereinheiten A1, A2, A3 und A4 angesteuert werden. Dioden 8, 9, 10 und 11 sind antiparallel zu jeweils einem der Thyristoren 1 bis 4 geschaltet. Ferner weist die Schaltung zwei Spulen 12 und 13 auf, in die zur Messung des durch die Last 5 fließenden Stromes jeweils zwei Hallgeneratoren eingebracht sind. Die Spulen, eventuelle Spulenkerne und die Hallgeneratoren sind dabei in bekannter Weise aufgebaut.

Die Last 5 kann beispielsweise ein Elektromotor eines Fahrzeugs und die rückladbare Gleichspanungsquelle eine Batterie sein.

Fig. 2 zeigt den Aufbau einer der Ansteuereinheiten A1 bis A4. Die Ansteuereinheit weist einen Hallgenerator 14, einen Komparator 15, ein UND-Glied 16, ein Verknüpfungsglied 17 sowie eine Triggerschaltung 18 für den Thyristor mit Gateabschaltung, beispielsweise den Thyristor 1 auf. Die Triggerschaltung 18 schaltet in bekannter Weise den Thyristor entsprechend dem an ihrem Eingang anliegenden Eingangssignal aus oder ein. Bei dem gezeigten Ausführungsbeispiel hat der Hallgenerator vier Anschlüsse a, b, c und d. Über die Anschlüsse a und b fließt der Steuerstrom Is, während an den Anschlüssen c und d die Hallspannung abgenommen wird. Die Anschlüsse b und d sind mit der Kathode des Thyristors 1, und der Anschluß c mit einem Eingangsanschluß des Komparators 15 verbunden. Durch diese Verbindung der Anschlüsse b und d wird erreicht, daß die Strommessung auf dem Potential der Ansteuereinheit erfolgt. Darüberhinaus hat dieses Ausführungsbeispiel den weiteren Vorteil, daß dieses Potential in etwa dem Potential an einem der Anschlüsse der Last entspricht, da der Spannungabfall über die Spulen 12 und 13 zu vernachlässigen ist.

Am anderen Eingangsanschluß des Komparators 15 liegt eine Referenzspannung Uref an. Die Variation der Referenzspannung erlaubt ein Einstellen des Sollwertes des Stroms. Der Ausgang des Vergleichers ist mit dem einen Eingangsanschluß des UND-Glieds 16 verbunden, an dessen anderen Eingangsanschluß ein Signal Ue anliegt, das angibt, ob die Stromversorgungseinheit für eine bestimmte Stromrichtung eingeschaltet werden soll.

Das Verknüpfungsglied 17 wird benötigt, weil mehrere Stromversorgungseinheiten parallel geschaltet werden. An den anderen Eingängen des Verknüpfungsgliedes liegen die Ausgangssignale der UND-Glieder oder der Komparatoren der entsprechenden Ansteuereinheiten der anderen Stromversorgungseinheiten an.

Das Verknüpfungsglied 17 kann dann beispielsweise ein ODER-Glied sein, das ein Signal abgibt, das den Thyristor sperrt, wenn eine der parallel geschalteten Stromversorgungseinheiten einen den Sollwert übersteigenden Strom mißt.

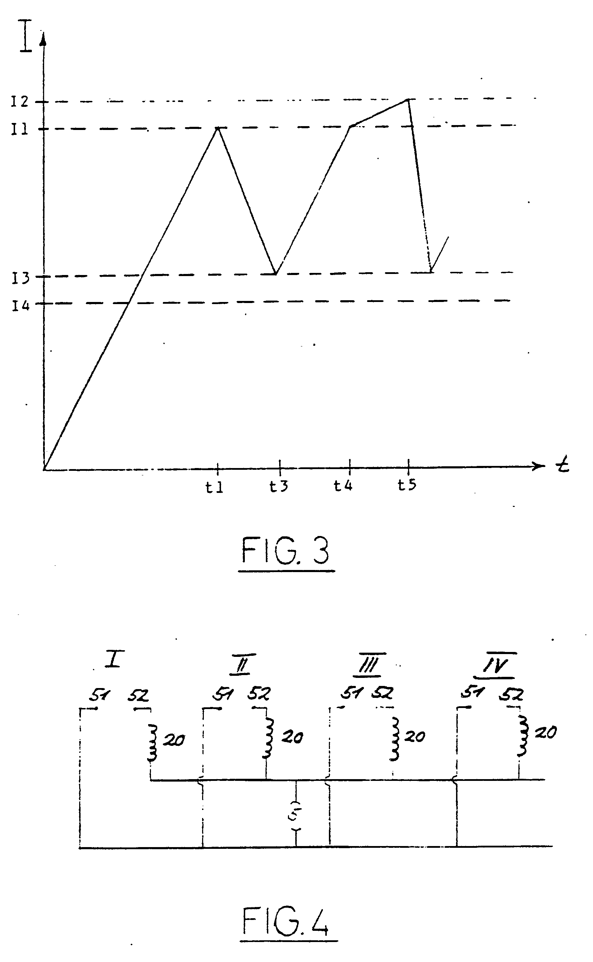

Die Wirkungsweise der vorstehend beschriebenen Schaltungen wird im folgenden in Verbindung mit Fig. 3 erläutert. Die jeweils paarweise einander zugeordneten Ansteuereinheiten A1/A3 und A2/A4 sind auf geringfügig voneinander abweichende Stromwerte eingestellt, bei denen sie den ihr zugeordneten Thyristor durchschalten oder sperren. Beispielsweise schaltet die Ansteuereinheit A2 den Thyristor 2 bei Überschreiten des Stromwertes I2 ab, der etwas größer als der Strom I1 ist, bei dem die Ansteuereinheit A4 den Thyristor 4 sperrt. Entsprechend schaltet die Ansteuereinheit A4 den Thyristor 4 bei Unterschreiten des Stromes I3 wieder ein, während die Ansteuereinheit A2 den Thyristor 2 erst bei Unterschreiten des Stroms I4 wieder einschaltet.

Nach dem Einschalten der Stromversorgungseinheit sind zum Erreichen einer bestimmten Stromrichtung beispielsweise die Thyristoren 2 und 4 durchgeschaltet, während die Thyristoren 1 und 3 sperren. Demgemäß steigt der Strom durch die Last 5 schnell an. Überschreitet der Strom zum Zeitpunkt t1 den Wert I1, so schaltet die Ansteuereinheit A4 den Thyristor 4 ab. Der Strom kann damit nur noch über die Last 5, die Diode 10 und den Thyristor 2 fließen und fällt schnell auf den Wert I3 (Zeitpunkt t3) ab, bei dem die Ansteuereinheit A4 den Thyristor 4 wieder durchschaltet. Auf diese Weise wird eine Zweipunkt-Stromregelung während des Fahrbetriebs realisiert.

Bei einem Bremsvorgang (Beginn zum Zeitpunkt t4) wird eine Spannung induziert, die auch noch nach dem Abschalten des Thyristors 4 den Strom ansteigen läßt. Wird dabei zum Zeitpunkt t5 der Wert I2 überschritten, wird auch der Thyristor 2 abgeschaltet, und die rückladbare Spannungsquelle über die Dioden 8 und 10 geladen. Entsprechend fällt der Strom rasch auf den Wert I3 ab (Zeitpunkt t5).

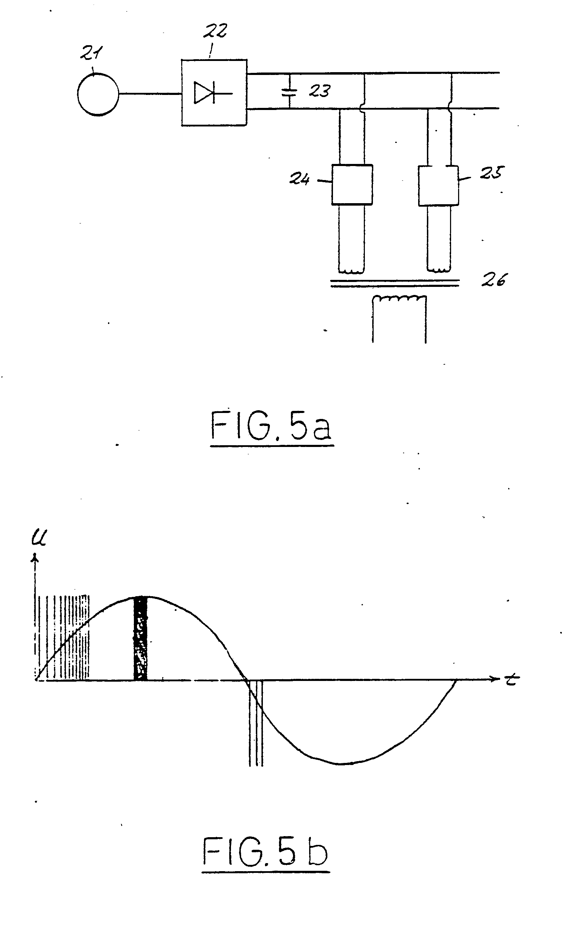

Fig. 4 zeigt die Parallelschaltung mehrerer erfindungsgemäßer Stromversorgungseinheiten, die mit I, II, ... bezeichnet sind. Die Ausgangsanschlüsse 51 der einzelnen Stromversorgungseinheiten sind jeweils direkt mit dem einem Anschluß der Last 5 verbunden, während die Ausgangsanschlüsse 52 jeweils über eine Schutzdrossel 20 mit dem anderen Anschluß der Last 5 verbunden sind. Durch die Schutzdrossel bzw. Schutzinduktivität 20 wird erreicht, daß auch kurzzeitig kein Strom fließen kann, der den Thyristor zerstören würde.

Fig. 5 zeigt eine weitere Anwendung der erfindungsgemäßen Stromversorgungseinheiten:

Zum Ausgleich von Spitzenbelastungen in Stromversorgungsnetzen ist beabsichtigt, die Zeit, die bis zum «Hochfahren» eines Spitzenlast-Kraftwerks benötigt wird, mittels der Energie zu überbrücken, die beispielsweise in mechanischen Schwungrädern gespeichert ist. Dabei besteht das Problem, daß der abgegebene Wechselstrom hinsichtlich seiner Phasenlage mit dem Netz-Wechselstrom synchronisiert sein muß.

Mittels der erfindungsgemäßen Stromversorgungseinheit läßt sich eine derartige Synchronisation leicht erreichen.

Fig. 5a zeigt das Prinzip der Schaltung :

Ein Schwungrad 21 ist Teil eines Generators. Der vom Generator abgegebene Wechselstrom wird mittels eines Gleichrichters 22 gleichgerichtet und mittels eines Kondensators 23 in an sich bekannter Weise geglättet. Mit den Anschlüssen des Kondensators 23 sind die Eingangsanschlüsse 6 bzw. 7 einer Vielzahl von erfindungsgemäßen Stromversorgungseinheiten verbunden, die beispielsweise gemäß den Fig. 1 und 2 aufgebaut sind, und von denen in Fig. 5a nur die Einheiten 24 und 25 dargestellt sind. Die Stromversorgungseinheiten 24 und 25 sind ausgangs- bzw. lastseitig mit den Primärwicklungen eines Transformators 26 verbunden, dessen Sekundärwicklung mit dem Netz verbunden ist.

Zum Nachbilden der sinusförmigen Netzspannung werden während der positiven Halbwelle beispielsweise die Thyristoren 2 und 4 der einzelnen Stromversorgungseinheiten (vergl. Fig. 1) getaktet. Dabei erfolgt die Taktung nach dem Nulldurchgang zunächst mit kurzer Impulsbreite und dann mit ansteigender Impulsbreite bis zum Spitzenwert der Netzspannung.

Während der negativen Halbwelle werden dann entsprechend die Thyristoren 1 und 3 getaktet.

Die Taktung kann mittels einer geeigneten (nicht dargestellten) Synchronisiereinheit erfolgen, die in an sich bekannter Weise aufgebaut ist und die entsprechend der gewünschten Impulsbreite ein Referenzspannungssignal beispielsweise an das UND-Glied 16 (Fig. 2) anlegt. Natürlich sind daneben noch beliebige andere Ansteuerungen möglich.

Fig. 5b zeigt das Prinzip, wie durch die variable Impulsbreite ein ausgangsseitig sinusförmiger Spannungsverlauf erhalten werden kann. Der erfindungsgemäße Aufbau der parallel geschalteten Stromversorgungseinheiten erlaubt eine Taktung mit sehr hoher Frequenz, so daß der sinusförmige Spannungsverlauf mit sehr feinen Stufen angenähert werden kann. Darüberhinaus ist der ausgangsseitige Spannungsverlauf, wenn die Stromversorgungseinheit entsprechend synchron zum Netz ein- bzw. ausgeschaltet werden, sehr genau mit der Netzspannung synchronisiert.

Die oftmals erforderlichen großen Ströme lassen sich leicht dadurch realisieren, daß praktisch beliebig viele Stromversorgungseinheiten (24 bzw. 25), von denen jede nur auf vergleichsweise kleine Ströme ausgelegt ist, parallel geschaltet werden können.

Die Parallelschaltung der einzelnen Einheiten nach einem der möglichen Prinzipien ist dabei ohne weiteres aufgrund des erfindungsgemäßen Aufbaus möglich.

**Patentansprüche**

1. Geregelte Hochstrom-Versorgungsanordnung für eine induktive und rückarbeitsfähige Last, bestehend aus mehreren eingangsseitig und ausgangsseitig parallelgeschalteten Stromversorgungseinheiten mit folgenden Merkmalen :

in jeder Stromversorgungseinheit ist jeder Pol der rückladbaren Spannungsquelle (6, 7) mit jedem Anschluß der Last (5) über jeweils ein Schaltelement (1/8, 2/9, 3/10, 4/11) verbunden,

jede Stromversorgungseinheit weist in Reihe mit der Last Strom-Meßeinrichtungen in Form von einer oder mehreren Meßspulen (12, 13) auf, die vom Ausgangsstrom der jeweiligen Stromversorgungseinheit durchflossen sind, und in deren Magnetfeldern Hallgeneratoren (14) eingebracht sind,

jedem Schaltelement ist eine Ansteuereinheit (14-18- zugeordnet, an der als Eingangssignal die Hallspannung eines jeweils angeordneten Hallgenerators anliegt und in der ein Komparator (15) und Verknüpfungsglie (16, 17) an den entsprechenden Austenereinheiter der anderen Stromversorgungseinheiten in der Weise angeordnet sind, daß ein Einschalten des Schaltelements nur dann erfolgt, wenn der Strom in allen Stromversorgungseinheiten einen vorgegebenen Wert unterschreitet, und ein Abschalten des Schaltelements dann erfolgt, wenn der Strom in nur einer der Stromversorgungseinheiten einen vorgegebenen Wert überschreitet.

2. Geregelte Hochstrom-Versorgungsanordnung für eine induktive und rückarbeitsfähige Last, bestehend aus mehreren eingangsseitig und ausgangsseitig parallelgeschalteten Stromversorgungseinheiten mit folgenden Merkmalen :

in jeder Stromversorgungseinheit ist jeder Pol der rückladbaren Spannungsquelle (6, 7) mit jedem Anschluß der Last (5) über jeweils ein Schaltelement (1/8, 2/9, 3/10, 4/11) verbunden,

eine Stromversorgungseinheit weist in Reihe mit der Last Strom-Meßeinrichtungen in Form von einer oder mehreren Meßspulen (12, 13) auf, die vom Ausgangsstrom dieser Stromversorgungseinheit durchflossen sind, und in deren Magnetfelder wenigstens ein Hallgenerator (14) eingebracht ist,

allen Schaltelementen sind Ansteuereinheiten (14-18) zugeordnet, die die jeweilig einander entsprechenden Schaltelemente nur dann Einschalten, wenn der in der einen Meßstelle gemessene Strom einen vorgegebenen Wert unterschreitet, und die jeweiligen Schaltelemente abschalten, wenn der Strom an der einen Meßstelle einen vorgegebenen Wert überschreitet.

3. Hochstrom-Versorgungsanordnung nach Anspruch 1 oder 2, dadurch gekennzeichnet, daß mindestens eine der Elektroden (b, d) des Hallgenerators mit dem Ausgangsanschluß des Schaltelements (1, 2, 3 bzw. 4) verbunden ist.

4. Hochstrom-Versorgungsanordnung nach einem der Ansprüche 1 bis 3, dadurch gekennzeichnet, daß die Schaltelemente (1, 2, 3, 4) Thyristoren mit Gateabschaltung sind.

5. Hochstrom-Versorgungsanordnung nach einem der Ansprüche 1 bis 4, dadurch gekennzeichnet, daß zwischen dem einen Ausgangsanschluß der Stromversorgungseinheit und der Last eine Induktivität vorgesehen ist.

6. Hochstrom-Versorgungsanordnung zum Ausgleich kurzzeitiger Netz-Spitzenwerte nach einem der Ansprüche 1 bis 5, dadurch gekennzeichnet, daß eine Notstromquelle (21) über eine Vielzahl parallel geschalteter Stromversorgungseinheiten (24, 25) mit der Primärwicklung eines Transformators (26) verbunden ist, dessen Sekundärwicklung mit dem Versorgungsnetz verbunden ist, und daß die Stromversorgungseinheit (24) zur Erzeugung einer sinusförmigen Ausgangsspannung synchron zur Netzfrequenz während einer Halbwelle getaktet wird.

7. Hochstrom-Versorgungsanordnung nach Anspruch 6, dadurch gekennzeichnet, daß die Notstromquelle ein mit einem mechanischen Schwungrad (21) verbundener Generator ist, dessen Ausgangsspannung ein Gleichrichter (22) gleichrichtet, und dessen Ausgangsanschlüsse mit der Vielzahl von Stromversorgungseinheiten verbunden sind.

**Claims**

1. Controlled electric peak current supply system for an inductive load suited for reverse operation, comprising a plurality of power supply units in parallel at the input and output sides, provided with the following features :

in each power supply unit, each terminal (6, 7) of said re-chargeable voltage source is connected to each terminal of said charge (5) through one switching device (1/8, 2/9, 3/10, 4/11), respectively,

each power supply unit includes current measuring devices in the form of one or several measuring coils (12, 13), in series with said load, the output current from the respective power supply unit passing through said measuring coils into whose magnetic fields Hall-effect voltage generators (14) are inserted,

one driving unit (14 to 18), respectively, is associated with each switching device, the Hall voltage of a respectively associated Hall-effect voltage generator being applied as the input signal into said driving unit comprising a comparator (15) and switching elements (16, 17) in an arrangement such that the switching device will be switched on only when the current in all power supply units will drop below a defined value while the switching device will be switched off when the current in only one of said power supply units will exceed a defined value.

2. Controlled electric peak current supply system for an inductive load suited for reverse operation, comprising a plurality of power supply units in parallel at the input and output sides, provided with the following features :

in each power supply unit, each terminal (6, 7) of said re-chargeable voltage source is connected to each terminal of said charge (5) through one switching device (1/8, 2/9, 3/10, 4/11), respectively,

one power supply unit includes current measuring devices in the form of one or several measuring coils (12, 13), in series with said load, the output current from the respective power supply unit passing through said measuring coils into whose magnetic fields at least one Hall-effect voltage generator (14) is inserted,

driving units (14 to 18) are associated with all switching devices, which switch on the mutually associated switching devices only when the current sensed at the single measuring point will drop below a defined value while they switch off the respective switching devices when the current at said single measuring point will exceed a defined value.

3. Peak current supply system according to Claim 1 or 2, characterized in that at least one of the electrodes (b, d) of said Hall-effect voltage generator is connected to the output terminal of said switching device (1, 2, 3 or 4).

4. Peak Current supply system according to any of Claims 1 through 3, characterized in that said switching devices (1, 2, 3, 4) are thyristors with gate cut-off means.

5. Peak current supply system according to any of Claims 1 through 4, characterized in that an inductor is provided between one of said output terminals of said power supply unit and said load.

6. Peak current supply system according to any of Claims 1 through 5, for compensation of transient mains peak values, characterized in that a standby power source (21) is connected through a plurality of parallel power supply units (24, 25) to the primary winding of a transformer (26) whose secondary winding is linked up with the supply mains network, and that said power supply unit is timed in synchronism with the mains frequency during a half-wave period so as to generate a sinusoidal output voltage.

7. Peak current supply system according to Claim 6, characterized in that said standby power source is a generator linked up to a mechanical flywheel (21), whose output voltage is rectified by a rectifier (22) while its output terminals are connected to said plurality of power supply units.

**Revendications**

1. Système réglé d'alimentation en courant électrique maximal pour une charge inductive et opérable en opposition, comprenant une pluralité des unités d'alimentation en courant électrique branchées en parallèle aux côtés d'entrée et de sortie, aux caractéristiques suivantes :

dans chacune desdites unités d'alimentation en courant électrique, chaque borne polaire (6, 7) de ladite source de tension rechargeable est connectée à un branchement de ladite charge (5) par un élément logique respectif (1/8, 2/9, 3/10, 4/11),

chacune desdites unités d'alimentation en courant électrique est pourvue des moyens ampèremétriques sous forme d'une ou plusieurs bobines de mesure (12, 13) en série avec ladite charge, qui sont parcourues par le courant de sortie provenant de l'unité d'alimentation en courant électrique respective et dans les champs magnétiques desquelles des générateurs Hall (14) sont intercalés,

une unité de commande (14 à 18) est attribuée à chaque élément logique, à laquelle la tension Hall d'un générateur Hall respectivement attribué est appliquée comme le signal d'entrée, et dans laquelle un élément comparateur (15) ainsi que des éléments logiques (16, 17) sont disposés d'une manière que l'élément logique soit mis en circuit seulement dès que le courant dans toutes les unités d'alimentation en courant électrique tombe en dessous d'une valeur définie, et que ledit élément logique soit mis hors circuit dès que le courant seulement dans une desdites unités d'alimentation en courant électrique dépasse une valeur définie.

2. Système réglé d'alimentation en courant électrique maximal pour une charge inductive et opérable en opposition, comprenant une pluralité des unités d'alimentation en courant électrique branchées en parallèle aux côtés d'entrée et de sortie, aux caractéristiques suivantes :

dans chacune desdites unités d'alimentation en courant électrique, chaque borne polaire (6, 7) de ladite source de tension rechargeable est connectée à un branchement de ladite charge (5) par un élément logique respectif (1/8, 2/9, 3/10, 4/11),

une desdites unités d'alimentation en courant électrique est pourvue des moyens ampèremétriques sous forme d'une ou plusieurs bobines de mesure (12, 13) en série avec ladite charge, qui sont parcourues par le courant de sortie provenant de l'unité d'alimentation en courant électrique respective et dans les champs magnétiques desquelles au moins un générateur Hall (14) est intercalé,

des unités de commande (14 à 18) sont attribuées à tous les éléments logiques, qui mettent les éléments logiques en rapport mutuel en circuit seulement dès que le courant mesuré audit point de mesure tombe en dessous d'une valeur définie, et qui mettent les éléments logiques respectifs hors circuit dès que le courant audit point de mesure dépasse une valeur définie.

3. Système d'alimentation en courant électrique maximal selon la Revendication 1 ou 2, caractérisé en ce qu'au moins une des électrodes (b, d) dudit générateur Hall est connectée au branchement de sortie dudit élément logique (1, 2, 3 ou 4).

4. Système d'alimentation en courant électrique maximal selon quelconque des Revendications 1 à 3, caractérisé en ce que lesdits éléments logiques (1, 2, 3, 4) sont des thyristors à interruption par gâchette.

5. Système d'alimentation en courant électrique maximal selon quelconque des Revendications 1 à 4, caractérisé en ce qu'une résistance inductive est pourvue entre ledit un des branchements de sortie de l'unité d'alimentation en courant électrique, et ladite charge.

6. Système d'alimentation en courant électrique maximal selon quelconque des Revendications 1 à 5, pour l'égalisation des valeurs de pointe du réseau temporaires, caractérisé en ce qu'une source électrogène de secours (21) est connectée, par une pluralité des unités d'alimentation en courant électrique en parallèle, à l'enroulement du circuit primaire d'un transformateur (26) dont l'enroulement secondaire est connecté au réseau d'alimentation, et que l'unité d'alimentation en courant électrique (24) est synchronisée avec la fréquence du réseau au cours d'une demi-onde afin de générer une tension sinusoïdale de sortie.

7. Système d'alimentation en courant électrique maximal selon la Revendication 6, caractérisé en ce que ladite source électrogène de secours est un générateur relié à une roue volante (21) mécanique, dont la tension de sortie est redressée par un redresseur (22) et dont les branchements de sortie sont reliés à une pluralité des unités d'alimentation en courant électrique.

FIG.1

FIG. 2

1

FIG. 3

FIG. 4

## FIG.5a

## FIG.5 b